# EUROPEAN PATENT APPLICATION

(11) **EP 4 239 303 A1**
(43) Date of publication of application: **06.09.2023**
(21) Application number: 22159887.3
(22) Date of filing: 03.03.2022
(51) Int. Cl.: G01L 9/00

(54) **MEASUREMENT OF A FLUID PARAMETER**

(71) Applicant: HUSQVARNA AB, 561 82 Huskvarna (SE)
(72) Inventor: Soor, Florian, 89312 Günzburg (DE); Demmelmaier, Tobias, 89284 Pfaffenhofen an der Roth (DE)
(74) Representative: Finkele, Rolf

(57) **Abstract**

A measuring system **(100)** for a fluid chamber **(200)** containing a fluid includes a measuring device **(120).** The measuring device **(120)** is a load cell **(120).** The measuring system **(100)** further includes a controller **(136)** which is configured to receive a signal **(S, V2, V2')** from the load cell **(120).** The controller **(136),** based on the received signal **(S, V2, V2')** from the load cell **(120),** determines a fluid parameter. The measuring system **(100)** is characterized in that the fluid parameter is a fluid pressure.

## Description

### TECHNICAL FIELD

The present disclosure relates to an assembly for measurement of a fluid parameter. More specifically, the present disclosure relates to the assembly for a quantitative measurement of the fluid parameter.

### BACKGROUND

Flow of fluids with optimum flow conditions or parameters may be desired for various industrial and domestic applications, such as, but not limited to, pumping, spraying, and the like. For ensuring smooth execution of the applications for which the fluid flow may be desired, the fluid parameters such as weight, pressure among others may require continuous monitoring and adjustment. The transducers, such as, micro-switches, piezo crystals, load cell among others may be used for continuous monitoring or measurement of the fluid parameters. The fluid parameters may further be controlled or adjusted by controllers in communication with the transducers.

An example of a transducer for a fluid level measurement is provided in PCT application 2012/137157 (hereinafter referred to as ' 157 reference). The '157 reference provides an assembly for measuring a water level of a food industry machine. The assembly includes a water tank holding the water and a load cell installed underneath the water tank. Weight of the water tank holding the water impinges on a strain gauge of the load cell. Further, the assembly includes a controller for receiving an electric signal from the load cell proportionate to the weight of the water tank and the weight of the water in the water tank. The controller further converts the weight to the water level of the water tank based on a pre-determined formula. The load cell proves to be a very cheap, compact, and effective transducer for the measurement of the force or weight of the fluid. However, there is still a need to uncover the further possible utilities of the load cells.

### SUMMARY

In view of the above, it is an objective of the present invention to provide an improved measuring system. The objective is at least partially achieved by a measuring system for a fluid chamber containing a fluid. The measuring system includes a measuring device. The measuring device is a load cell. The measuring system further includes a controller which is configured to receive a signal from the load cell. The controller determines a fluid parameter based on the received signal from the load cell. The measuring system is characterized in that the fluid parameter is a fluid pressure.

Thus, the present disclosure provides a cost-effective solution for the measurement of the fluid pressure in the fluid chamber. The present disclosure provides a novel usage of an already known and widely used load cell.

According to an embodiment of the present disclosure, the fluid chamber is selected from one or more of an electronic pressure pump and a pressure tank with an associated piping system. The electronic pressure pump and the pressure tank may generally include a pressure sensor for measuring the fluid pressure. They may require continuous measurement of the fluid pressure for their working to execute an application. Hence, the measuring system including the load cell and the controller may advantageously be employed to the electronic pressure pump and the pressure tank. This may prove to be a cost-effective pressure sensing system.

According to an embodiment of the present disclosure, a pump motor turns ON/OFF based on the fluid pressure in the one or more of the electronic pressure pumps and the pressure tank and the associated piping system. During any known industrial or domestic application with the one or more of the electronic pressure pumps and the pressure tank, if the measured fluid pressure turns out to be less than the fluid pressure which may be desired for proper execution of the application, then the pump motor may turn ON to increase the fluid pressure to the desired levels. Similarly, when the measured fluid pressure reaches to the desired value, then the pump motor may turn OFF.

According to an embodiment of the present disclosure, the load cell is selected from one or more of a pneumatic load cell, a hydraulic load cell, a strain gauge and a capacitance load cell. The load cells may be selected based on their respective advantages, disadvantages, and suitability in different working environments. For example, the hydraulic load cells are inherently explosion proof and insensitive to temperature variations. Additionally, they contain no fluids that might contaminate the process if the diaphragm ruptures. However, the hydraulic load cells may have slow speed of response. Therefore, selection of type of load cells may be done in accordance with application requirements thereof.

According to an embodiment of the present disclosure, the load cell is integrated with the fluid chamber. The load cell is integrated with the fluid chamber to provide accurate measurements.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a flow diagram of a measuring system for a fluid chamber containing a fluid, in accordance with an aspect of the present disclosure;
**FIG. 2** shows an exploded view of a measuring system of **FIG. 1****,** in accordance with an aspect of the present disclosure;
**FIG. 3** shows a flow diagram demonstrating a flow of information through some of the hardware components shown in **FIG. 2****,** in accordance with an aspect of the present disclosure; and
**FIG. 4** shows a flow diagram of a measuring system for an electronic pressure pump, in accordance with an aspect of the present disclosure.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

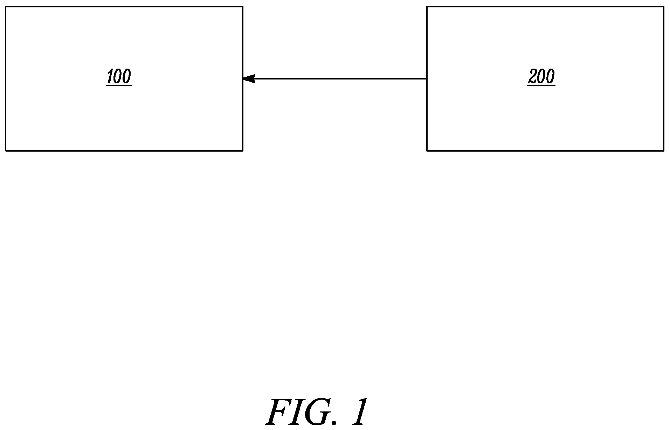

**FIG. 1** shows a flow diagram for a measuring system **100** for a fluid chamber **200** containing a fluid (not shown). In some embodiments, the fluid chamber **200** may be a fluid reservoir such as a storage tank for storing the fluid. However, the fluid chamber **200** of the present disclosure may be a pump and an associated piping system that may allow the transportation or passage of the fluid. Further, the fluid may be a liquid or a gas that may be stored or transported as per the application requirements.

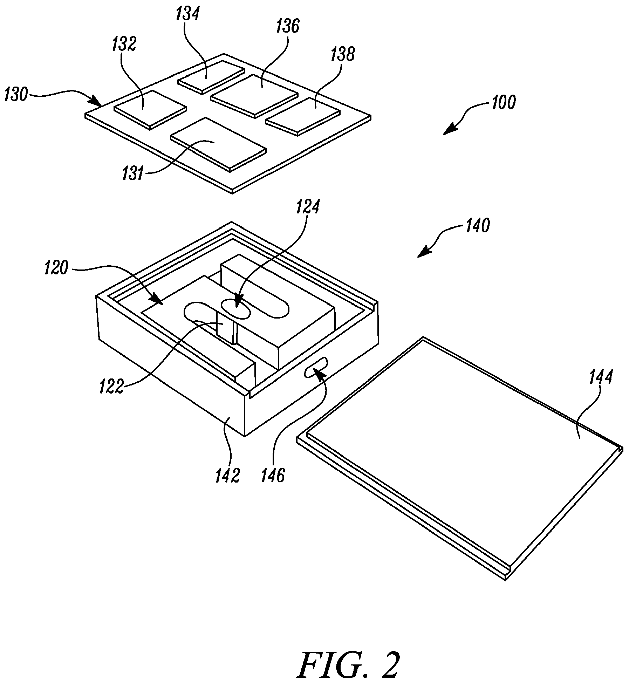

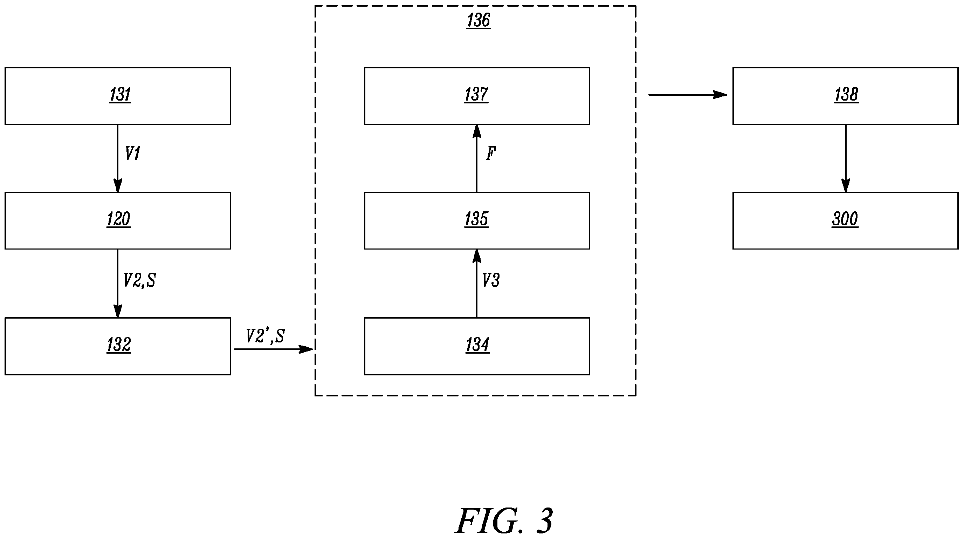

As illustrated in **FIGS. 2** and **3****,** the measuring system **100** includes a measuring device **120.** The measuring device **120** is a load cell **120.** The load cell **120** is advantageously quick and precise. Further, the load cell **120** is affordable and has a longer life span. The measuring system **100** further includes a controller **136** which is configured to receive a signal "S" (in the form of an output voltage "V2" or an amplified output voltage "V2'") from the load cell **120.** The controller **136** may be a microprocessor **136** or a microcontroller. The controller **136** based on the received signal "S" from the load cell **120** determines a fluid parameter. The fluid parameter in the present disclosure is a fluid pressure.

The fluid pressure may be a considerably important factor for evaluating a fluid flow. The rate at which the fluid flows from the piping system, or any other hydraulic or pneumatic channel depends on the pressure the fluid is under. The optimum fluid pressure may vary depending upon the application for which the fluid may be intended, and too high or too low fluid pressure may have certain disadvantages. For example, high fluid pressure may lead to leaks, damage to the pipes, and the like. Likewise, low fluid pressure may lead to an inefficient operation of the applications such as, but not limited to, spraying, showering, pumping and the like. Thus, there may be a requirement to constantly check and regulate the pressure of the flowing fluid for efficient execution of the applications for which the fluid flow may be intended.

The load cell **120** may be selected from one or more of a pneumatic load cell, a hydraulic load cell, a strain gauge and a capacitance load cell. The type of the load cell **120** may be selected based on the advantages, disadvantages, and suitability of the different types of the load cells **120** in different working environments. However, as illustrated in **FIG. 2****,** the load cell **120** of the present disclosure is a strain gauge load cell **120,** which will be alternatively referred to as the load cell **120** in the present disclosure. Further, the load cell **120** is an S-shaped block that may be used to measure either a compression or a tension. However, the load cell **120** with any other shape known in the art may be used without limiting the scope of the present disclosure in any manner.

A strain gauge **122** is shown and illustrated in **FIG. 2** near a center, hollow portion **124** of the load cell **120.** The center of the load cell **120** is hollow to ensure that a linear output voltage "V2" from the load cell **120** is produced as a function of the strain. Further, the strain gauge **122** may be of the type commonly known in the art that may be used to measure a strain on an object (in this case the load cell **120).** The strain gauge **122** may preferably include an insulating flexible backing which may support a metallic deformable foil pattern. The strain gauge **122** may be attached to the load cell **120** by a suitable adhesive, such as a cyanoacrylate. However, the strain gauge **122** may be attached to the load cell **120** by any other means known in the art without limiting the scope of the present disclosure.

When the foil of the load cell **120** is deformed, the electric resistance of the strain gauge **122** changes. The load cell **120** may include up to four strain gauges **122.** Preferably, the strain gauges **122** may be arranged as a Wheatstone bridge, which is a commonly known electric circuit configuration for measurement of an electrical resistance. The strain may be applied to the load cell **120** by virtue of the fluid flowing in the fluid chamber **200.** The load cell **120** is integrated with the fluid chamber **200** to provide accurate measurements. However, the load cell **120** of the present disclosure may preferably not be in direct contact with the flowing fluid. Further, the strain, due to the force of the flowing fluid, may be applied to the load cell **120** by any means known in the art without limiting the scope of the disclosure in any manner. When this strain occurs, the strain gauge **122** (and any additional strain gauges **122** present on the load cell **120)** may detect a change in the electrical resistance.

The strain gauge or strain gauges **122** may preferably be in electronic communication with various components of an electronic board **130,** which may be embodied as a printed circuit board, or "PCB". Various commonly known and understood electronic components are preferably mounted on the PCB **130.** In a preferred embodiment, the PCB **130** includes each of an amplifier **132,** an analog to digital converter **134,** a microprocessor **136** (alternatively referred to as the controller **136** in the preferred embodiment), a transmission unit **138,** and a power source **131.** The power source **131** may be a battery.

In the preferred embodiment, as shown in **FIG. 2****,** the load cell **120** and the PCB **130** are preferably contained within a housing **140.** The housing **140** includes a base member **142** and a lid member **144.** The lid member **144** may preferably be releasably attachable to the base member **142** in any manner known in the art, such as a friction fit, a snap fit or the like. The housing **140** further includes a port, or an aperture **146,** located in the base member **142.** The port **146** may be useful in some embodiments where the load cell **120** and strain gauge or strain gauges **122** are housed separately from the PCB **130** and where wires may be required to connect the load cell **120** and the strain gauge **122** or strain gauges **122** to the PCB **130.**

Further, **FIG. 3** shows a flow diagram that models the flow of information that preferably occurs for some of the hardware components of the measuring system **100.** As shown in **FIG. 3****,** the power source **131** is responsible for providing an input voltage "V1" to the load cell **120** (though via other various electronic communications known in the art, other electronic components within the measuring system **100** may also be powered by the power source **131).** The load cell **120,** upon detecting a change in the strain of the load cell **120** due to the fluid flowing in the fluid chamber **200,** preferably causes a resistance change in the strain gauge or strain gauges **122** of the load cell **120.** The load cell **120** then preferably outputs the signal "S" or the output voltage "V2" (associated with the change in resistance in the strain gauge or strain gauges **122)** to the amplifier **132.** An amplified output voltage "V2"', which is output in an analog form, is then received by the analog to digital converter **134.** The analog to digital converter **134** preferably outputs a digitized output voltage "V3".

Further, a calibration module **135** applies a calibration factor to the digitized output voltage "V3". The calibration factor is used to convert the change in voltage "V3" to a change in force "F" within the liquid chamber **200.** The calculated force "F" is then subjected to a software module **137.** The software module **137** includes a software algorithm that converts the calculated force "F" to a fluid pressure. The application of the calibration factor and the software algorithms may be carried out by the microprocessor **136** in a manner known in the art, substantially similar to other microprocessors.

The fluid pressure of the fluid flowing in the fluid chamber **200** is then sent via the transmission unit **138** to a display system, remote server, or a smartphone **300.** The transmission unit **138** may preferably be a wireless transmission unit **138.** The transmission unit **138** may communicate the fluid pressure to the display system, remote server, or the smartphone **300** via a Bluetooth, Wi-Fi or any other known wireless transmission means. This way, a user carrying out the application employing the flowing fluid may be able to retrieve data regarding the fluid pressure in the fluid chamber **200** in real time.

In some embodiments, the fluid pressure in real time may be compared with a fluid pressure database stored in the remote server or the smartphone **300.** The fluid pressure database may include fluid pressure values or a range of fluid pressure values required for the proper execution of different types of industrial and domestic applications. In case of discrepancy between the real time fluid pressure value and the stored fluid pressure value, a wireless signal may be sent by the remote server or the smartphone **300** so that necessary actions may be taken for the smooth execution of the application for which the fluid flow may be intended.

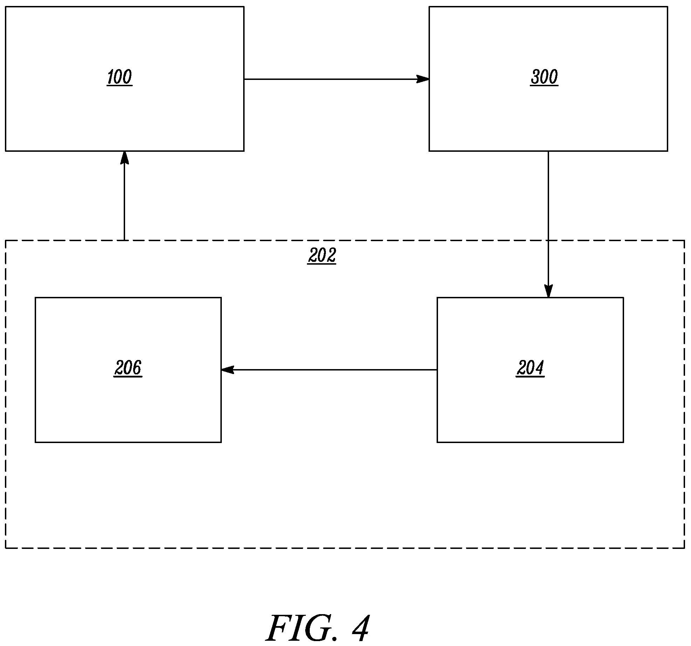

In some embodiments, the fluid chamber **200** is selected from one or more of an electronic pressure pump **202** and a pressure tank (not shown) with their associated piping system (not shown). The electronic pressure pump **202** and the pressure tank may generally require continuous measurement of the fluid pressure to execute any known industrial or domestic application. Hence, during the application with the one or more of the electronic pressure pumps **202** (as shown in **FIG. 4****)** and the pressure tank, the measuring system **100** of the present disclosure is employed. The real time measured pressure is wirelessly communicated with the remote server or the smartphone **300** and may be compared with the fluid pressure database stored in the remote server or the smartphone **300.** If the measured fluid pressure is less than the fluid pressure which may be desired for proper execution of the application, a signal is sent by the remote server or the smartphone **300** to a controller **204** (as shown in **FIG. 4****)** integrated with a pump motor **206.** The controller **204** may then automatically turn ON the pump motor **206** to increase the fluid pressure to the desired levels. Similarly, when the measured fluid pressure reaches to the desired value, then the pump motor **206** may be turned OFF.

In some embodiments, the wireless transmission between the transmission unit **138** and the remote server or the smartphone **300** and further between the remote server or the smartphone **300** and the controller **204** integrated with the pump motor **206** may all be carried out automatically by any means known in the art.

Thus, the present disclosure provides a cost-effective solution for the measurement of the fluid pressure in the fluid chamber **200.** The present disclosure provides a novel usage of an already known and widely used load cell **120.**

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Measuring System
- **120**: Load Cell
- **122**: Strain Gauge
- **124**: Hollow Portion
- **130**: PCB
- **131**: Power Source
- **132**: Amplifier
- **134**: Analog to digital converter
- **135**: Calibration Module
- **136**: Controller/ Microprocessor
- **137**: Software module
- **138**: Transmission Unit
- **140**: Housing
- **142**: Base Member
- **144**: Lid Member
- **146**: Port/ Aperture
- **200**: Fluid Chamber
- **202**: Electronic Pressure Pump
- **204**: Controller
- **206**: Motor
- **300**: Display System/ Remote Server/Smartphone
- **V1**: Input Voltage
- **V2**: Output Voltage
- **V2'**: Amplified Output Voltage
- **V3**: Digitized Output Voltage
- **S**: Signal
- **X**: Calibration Factor
- **D**: Software Algorithm
- **F**: Calculated force

## Claims

1. A measuring system **(100)** for a fluid chamber **(200)** containing a fluid, comprising:
a measuring device **(120),** wherein the measuring device **(120)** is a load cell **(120);** and
a controller **(136)** configured to receive a signal **(S, V2, V2')** from the load cell **(120)** and determine a fluid parameter based on the received signal **(S, V2, V2');**
**characterized in that:**
the fluid parameter is a fluid pressure.

2. The measuring system **(100)** of claim 1, wherein the fluid chamber **(200)** is selected from one or more of an electronic pressure pump **(202)** and a pressure tank with an associated piping system.

3. The measuring system **(100)** of claim 2, wherein a pump motor **(206)** turns ON/OFF based on the fluid pressure in the one or more of the electronic pressure pumps **(202)** and the pressure tank and the associated piping system.

4. The measuring system **(100)** of any of the preceding claims, wherein the load cell **(120)** is selected from one or more of a pneumatic load cell, a hydraulic load cell, a strain gauge, and a capacitance load cell **(120).**

5. The measuring system **(100)** of any of the preceding claims, wherein the load cell **(120)** is integrated with the fluid chamber **(200).**
